Europäisches Patentamt

European Patent Office

Office européen des brevets

(19)

(11) **EP 0 595 223 B1**

(12) **EUROPEAN PATENT SPECIFICATION**

(45) Date of publication and mention
of the grant of the patent:
**03.03.1999 Bulletin 1999/09**

(51) Int Cl.⁶: **H04N 9/78**, H04N 9/64

(21) Application number: **93117187.0**

(22) Date of filing: **22.10.1993**

(54) **Delay circuit**

Verzögerungsschaltung

Circuit à retard

(84) Designated Contracting States:
**DE FR GB**

(30) Priority: **26.10.1992 JP 287584/92**

(43) Date of publication of application:
**04.05.1994 Bulletin 1994/18**

(73) Proprietor: **SANYO ELECTRIC COMPANY
LIMITED
Moriguchi-shi, Osaka 570 (JP)**

(72) Inventor: **Iizuka, Hiroshi
Ora-gun, Gunma (JP)**

(74) Representative: **Glawe, Delfs, Moll & Partner
Patentanwälte
Postfach 26 01 62
80058 München (DE)**

(56) References cited:
EP-A- 0 284 768          FR-A- 2 639 785
US-A- 4 013 834          US-A- 4 053 932
US-A- 4 686 495          US-A- 4 939 677

• PATENT ABSTRACTS OF JAPAN vol. 16, no. 499
  (E-1280)15 October 1992 & JP-A-04 185 195
  (MATSUSHITA)
• PATENT ABSTRACTS OF JAPAN vol. 10, no. 379
  (E-465)18 December 1986 & JP-A-61 171 210
  (HITACHI)
• PATENT ABSTRACTS OF JAPAN vol. 12, no. 234
  (E-629)5 July 1988 & JP-A-63 026 188
  (MATSUSHITA)

## Description

BACKGROUND OF THE INVENTION

1. Field of the Invention

This invention relates to a delay circuit of a comb filter often used for Y/C separation in composite video signal reproducers such as a television, and particularly this invention is also applicable to the removal of cross talk noise during VTR reproduction.

2. Description of the Related Art

In recent years, high picture quality of domestic video signal reproducers including televisions has been demanded, and the use of comb filters for Y/C separation circuits of video signal reproducers of NTSC (National Television System Committee) system is dominant. A similar trend is also observed in Europe where high picture quality of video signal reproducers including televisions has also been demanded; band-pass filters and notch filters were formerly used as Y/C separation circuits of video signal reproducers of PAL (Phase Alternation by Line color television) system, but comb filters for reducing cross color are used.

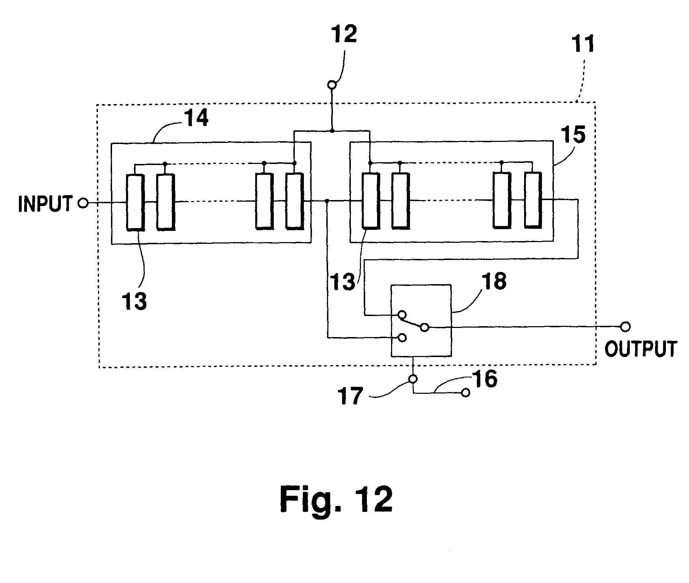

On the other hand, the television manufacturers in USA (Japan) have manufactured two types of televisions for NTSC (domestic) and PAL (Europe); however, if televisions that can be used for both the NTSC and PAL systems are designed, cost reduction can be expected due to the effects of mass production, and such televisions are demanded. Likewise, comb filters and delay elements for use as a comb form that can be used in Europe as well as domestically are also demanded. Hitherto, glass delay lines have been used as the delay elements, but can only be used for either one of the NTSC or PAL systems. Delay elements made of CCDs and shift registers that can be used for both the systems are proposed. For example, a delay circuit as shown in Figure 12 is described in Japanese Patent Laid-Open No.Hei 4-185195.

In Figure 12, numeral 11 is a delay memory (broken line portion) which is used with a comb filter. Numeral 12 is an input clock pin. Numeral 13 is a delay cell which delays one clock in response to a sampling clock from the input clock pin 12. Numeral 14 is a delay section which has 910 delay cells 13. When a sampling clock signal of NTSC is input through the input clock pin 12, the delay section 14 can delay a composite video signal as long as one H (horizontal synchronizing signal) period of NTSC. Numeral 15 is a delay section which has 1360 delay cells 13. The total delay time of the delay sections 14 and 15 becomes 2270 clocks. Thus, when a sampling clock signal of PAL is input through the input clock pin 12, the delay sections 14 and 15 in combination can delay an input composite video signal as long as two H (horizontal synchronizing signal) periods. Numeral 16 is a switch signal sent to the delay memory 11 from an external circuit. Numeral 17 is a switch signal input pin for inputting the switch signal 16. Numeral 18 is a selector for sending an output signal from either the delay section 14 or 15 to an external circuit in response to the switch signal input through the switch signal input pin 16.

The operation of the delay memory used for both PAL and NTSC will now be described with reference to Figure 12.

An NTSC or PAL sampling clock is input to the input clock pin 12. The NTSC sampling clock is 14.31818 MHz and the PAL sampling clock is about 17.7 MHz. Each of the delay section 14 having 910 delay cells 13 and the delay section 15 having 1360 delay cells 13 receives a clock signal through the input clock pin 12. Each delay cell 13 delays a signal input from the delay cell 13 at the preceding stage as long as one clock and sends the delayed signal to the delay cell 13 at the following stage. Thus, when a composite video signal input to the delay memory 11 is NTSC, the signal is delayed by the delay section 14 as long as one H (horizontal synchronizing signal) period of NTSC; when PAL, the signal is delayed by the delay sections 14 and 15 as long as two H (horizontal synchronizing signal) periods of PAL. The switch signal 16 sent from the external circuit is adapted to control the selector 18 so as to select the output of the delay section 14 when the video signal is NTSC or the output of the delay section 15 when the video signal is PAL.

According to Figure 12, the delay sections 14 and 15, the switch signal pin 17, and the selector can be provided for delaying for a comb filter used for both the PAL and NTSC systems.

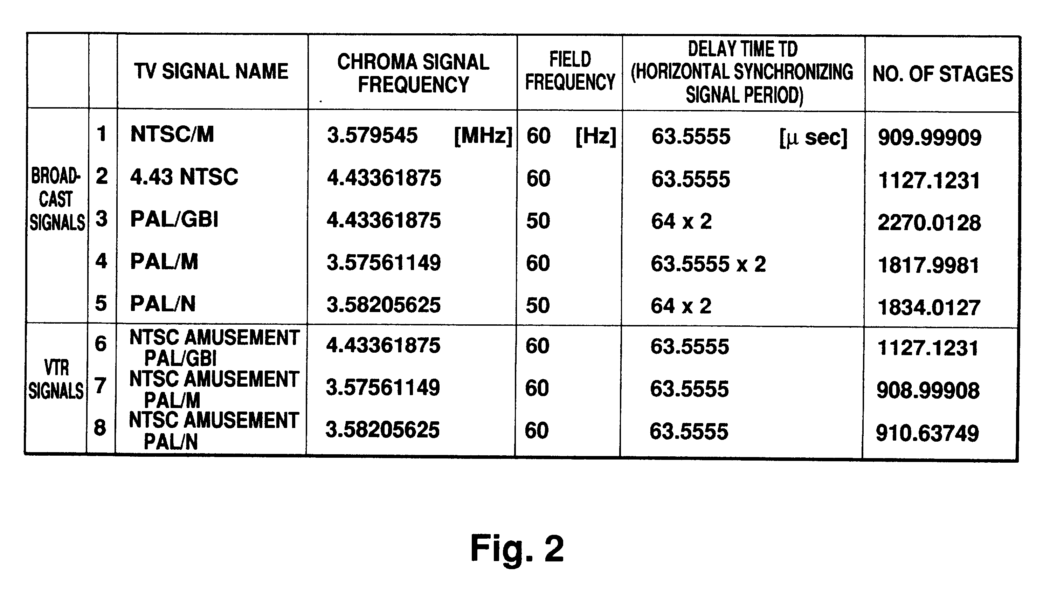

By the way, household VTRs with a tuner in Europe, South-East Asia and South, America must be capable of recording and reproducing various types of broadcast TV signals and also reproducing from video cassette tape on which TV signals of various broadcasting systems are recorded, as shown in Figure 2. Since the NTSC and PAL systems have various chroma signal frequencies and horizontal synchronizing signal periods, various delay times must be provided. Since at the circuit in Figure 12, the delay time is determined by the number of delay cells 13 and the clock signal frequency, the delay times that can be provided become discrete; the correct delay time can be set only for the NTSC/M, PAL/GBI, PAL/M, PAL/N, and NTSC/M ConV PAL/M signals in Figure 2. The necessary number of CCD stages are listed at the extreme right hand side of Figure 2. For example, in NTSC/M, the number of the stages is calculated as follows:

$$4 \times 3.579545 \, [\text{MHz}] \times 63.5555 \, [\mu \sec]$$

$$= 909.99909$$

where "4" is multiplied to reduce so-called aliasing noise. At the circuit in Figure 12, the clock signal frequencies are switched for use with both the NTSC and PAL systems, thus no less than 2270 delay cells are required for the high frequency of the PAL system.

US-A-4,053,932 shows a delay circuit comprising a first group of delay sections for delaying the television signal and means for switching the delay sections for setting a delay time of said first delay circuit. This circuit also shows a second group of delay sections for delaying the television signal.

EP-A-0 284 768 shows a determination circuit, which distinguishes television signals and outputs said control signal in response to the determined television signal type.

SUMMARY OF THE INVENTION

Accordingly, it is an object of the invention to provide a delay circuit which can set the delay times appropriate for various types of television signals.

This object is solved by the features of claims 1 or 2. Further features and advantages are shown in the subclaims.

The means of the features of the claims, the delay time can be set more accurately. Furthermore, a lot of delay times can be easily switched and the delay time can be automatically set in response to the television signal type even if the television type is not specified.

BRIEF DESCRIPTION OF THE DRAWINGS

In the accompanying drawings:

Figure 1 is a circuit diagram showing a delay circuit according to the invention;
Figure 2 is a table listing characteristics of television signals of various systems;
Figure 3 is a table listing characteristics of television signals of various systems;
Figure 4 is a circuit diagram of variable time delay means.
Figure 5 is an illustration of components of a high-pass filter in the variable time delay means in Figure 4;
Figure 6 is an illustration of components of a band-pass filter in the variable time delay means in Figure 4;
Figure 7 is an illustration of components of a low-pass filter in the variable time delay means in Figure 4;
Figure 8 is graphs representing the relationships among output signals of the filters in the variable time delay means in Figure 4;
Figure 9 is a detailed circuit diagram of a variable amplifier; Figure 10 is a block diagram of a comb filter according to an embodiment 2 of the invention;

Figure 11 is a table listing examples of setting switches of the comb filter in Figure 10 for various television signals; and
Figure 12 is a circuit diagram showing a conventional delay circuit.

DESCRIPTION OF THE PREFERRED EMBODIMENTS

Embodiment 1.1:

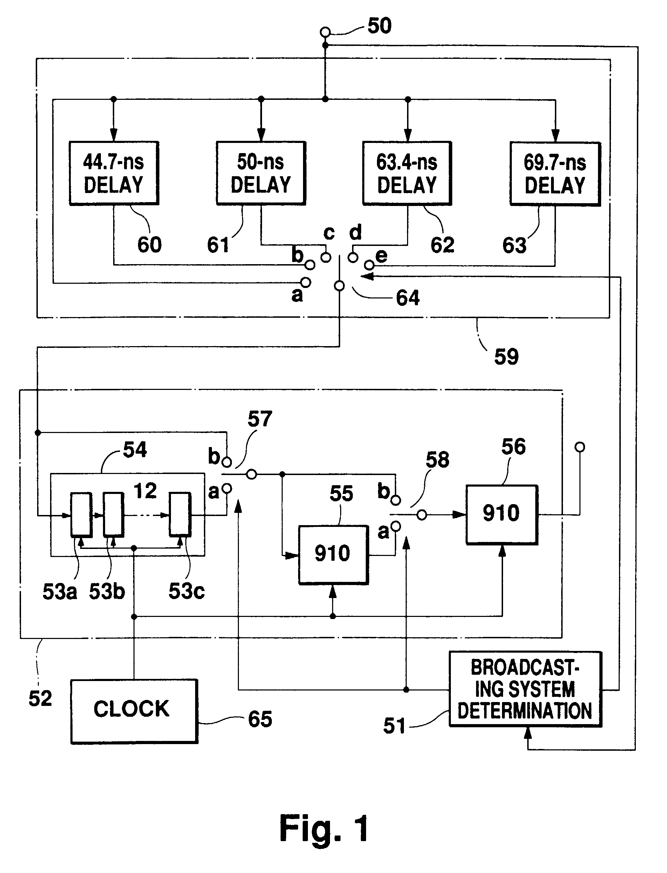

Figure 1 is a circuit diagram showing embodiment 1.1 of the invention, wherein numeral 50 is an input terminal to which television broadcast signals of a plurality of specifications are applied, numeral 51 is a determination circuit which distinguishes the television broadcast signals of the different specifications and generates a determination signal and numeral 52 is a first delay circuit which comprises a first delay section 54 which consists of a plurality of delay elements 53a, 53b, 53c, ..., for transferring the television signals in sequence in response to clock signals, a second and a third delay sections 55 and 56 each having a similar configuration to that of the first delay block 54, and switches 57 and 58 for connecting the delay sections in response to the determination signal for selecting one of delay paths. Numeral 59 is a second delay circuit which comprises four delay means 60 to 63 and a switch 64 for selecting one of the delay means in response to the determination signal. Numeral 65 is a clock signal source for generating a clock signal of frequency 14.31818 MHz which is four times the NTSC burst signal frequency 3.579545 MHz for reducing aliasing noise.

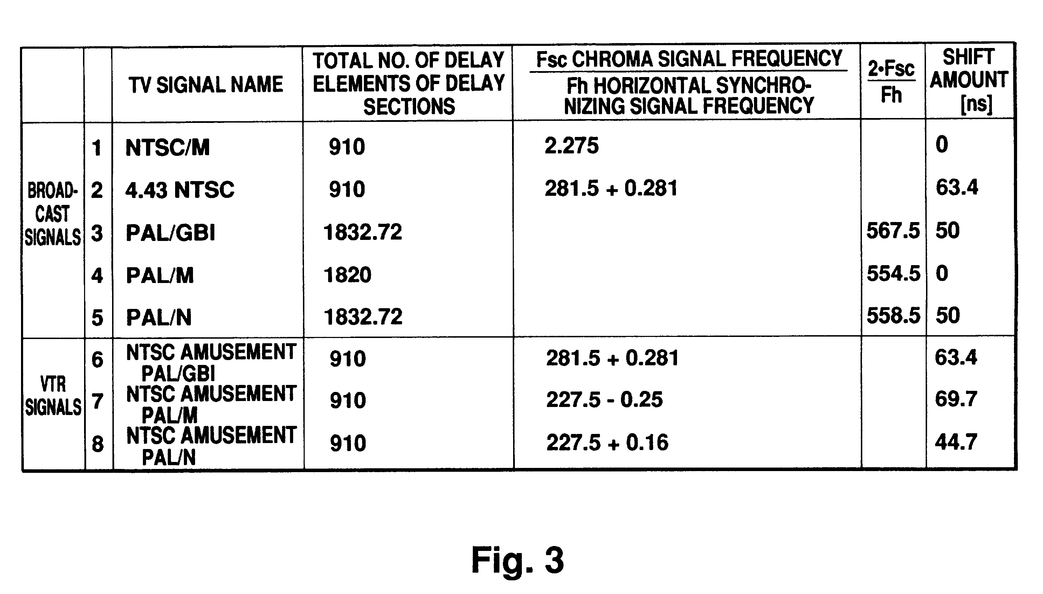

Various TV signals as shown in Figure 2 are input to the input terminal 50 of the second delay circuit 59 in Figure 1 for Y/C separation or cross talk removal at VTR reproduction. The TV signals numbered 1 to 5 in Figure 2 are broadcast signals from broadcasting stations. The TV signals 6 to 8 in Figure 2 are each the signal state temporarily occurring to reproduce from VTR tape, called VTR signals (color signal system is converted into another). The delay time TD corresponding to one H (horizontal synchronizing signal) period of each TV signal in Figure 2 is shown in Figure 2; the delay time TD must be generated by the delay circuit in Figure 1. The NTSC TV signals in Figure 2 require a delay of one H period and the PAL TV signals require a delay of two H periods. The number of delay element stages required to provide the delay time TD are listed under the rightmost column of Figure 2. The delay times are set by the first delay circuit 52 in Figure 1 as much as possible. The delay time of the first delay circuit 52 is determined by the product of the number of delay element stages and the clock signal frequency. When the optimum number of delay element stages is found from the clock signal frequency 14.31818 MHz and the delay times in Figure 2, the result 909.99909 is returned as shown in Figure 2. Then, the TV signals numbered 1, 2, 4, 6, 7, and 8 can be delayed accurately with the number of the stages, as shown in Figure 3. Since the TV signal numbered 4 in Figure 3 is passed through 910 stages twice, the first delay circuit 52 is provided with the second and third delay sections 55 and 56 each comprising 910 delay element stages. The TV signals numbered 3 and 5 in Figure 3 require 12 delay element stages and 50nsec (=0.72-bit) delay time from 1832.72 - 910 x 2 = 12.72. Then, the number of the delay element stages of the first delay circuit 54 is set to 12 and the delay means 61 having the 50nsec delay time is selected at the second delay circuit 59.

Therefore, the first delay circuit 52 and the delay means 61 in the second delay circuit 59 enable the delay times TD in Figure 2 to be set.

On the other hand, for the chroma signal frequency Fsc and horizontal synchronizing signal frequency Fh of the TV signal, the result of Fsc/Fh or 2Fsc/Fh must be represented by n+ (n is positive integer) 0.5 to establish the frequency interleave relationship. The results are shown in Figure 3. Since sideband components of frequency components of brightness signals distribute at frame frequency fF (30 Hz) intervals with harmonic of horizontal scanning frequency fH (15.75 kHz) as the center, color signals are inserted in the gaps. This is called frequency interleaving. Each of the TV signals numbered 2, 6, 7, and 8 in Figure 3 contain fractions. Then, in the invention, the second delay circuit 59 corrects 63.4 nsec (=0.281/4.43361875 MHz) as the delay time corresponding to the fraction 0.281 in Figure 3, 69.7 nsec as the delay time corresponding to the fraction 0.25, and 44.7 nsec as the delay time corresponding to the fraction 0.16.

Therefore, the first delay circuit 52 and the delay means 60, 62, and 63 in the second delay circuit 59 enable the delay time caused by the frequency interleave in Figure 3 to be corrected.

Thus, all of the TV signals in Figure 3 can be delayed a desired delay amount by appropriately switching the switches 57, 58, and 64 in the first and second delay circuits 52 and 59 in Figure 1.

For example, if the TV signal NTSC/M is selected, the switches 64, 57, and 58 are adapted to select c, a, and a respectively. Consequently, the sum delay of delay determined by 1832 delay element stages and 50nsec delay can be provided. Switch operation of the switches 57, 58, and 64 corresponding to other TV signals will not be discussed.

The delay means in Figure 1 can be made of active filters which can automatically adjust variations in the elements.

As described above, according to the invention, the first delay circuit such as CCDs and the second delay circuit of minute delay elements can provide a delay circuit having the delay times that can cover the TV signals of various systems. Particularly, according to the invention, if the first delay circuit cannot complete a delay, the second delay circuit serves as a complement to the first delay circuit; a delay amount also considering the interleave relationship can be provided. Further, according to the invention, since the first delay circuit is driven with a clock signal corresponding to a low clock signal frequency of the NTSC system, the maximum number of delay elements can be suppressed to 1832.

Embodiment 1.2:

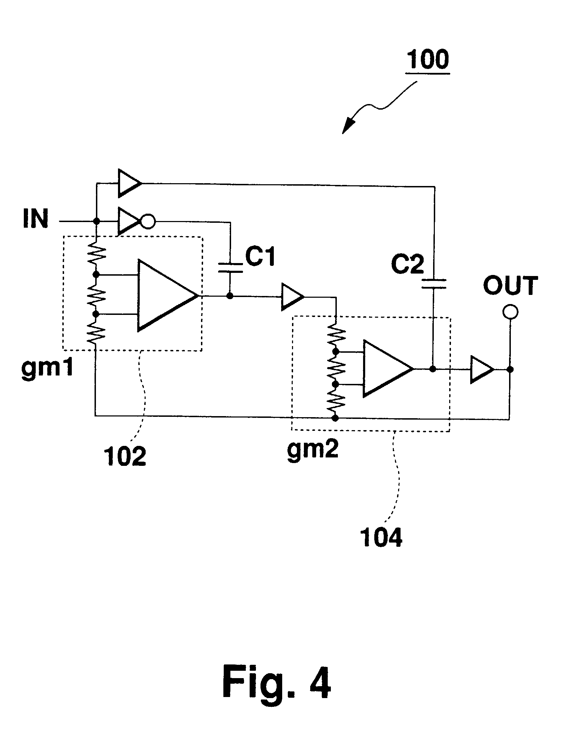

Although the second delay circuit 59 in the embodiment 1.1 comprises the delay means 60 to 63 each having a predetermined delay time, it is also preferred that only one delay means having variable delay times is provided, in which case a plurality of delay means are not necessary. Figure 4 shows a circuit diagram of such a delay means having variable delay times.

As shown in Figure 4, the variable time delay means 100 comprises a plurality of amplifiers, the conductance of variable amplifiers 102 and 104 of which can be varied. The variable time delay means 100 changes the delay time by changing the conductance of the variable amplifiers 102 and 104.

The variable time delay means 100 has such a configuration that a low-pass filter (LPF), a band-pass filter (BPF), and a high-pass filter (HPF) are connected in parallel. The mutual conductance of the variable amplifiers 102 and 104 is changed, thereby changing frequencies where frequency bands are crossed over; as a result, the delay time changes.

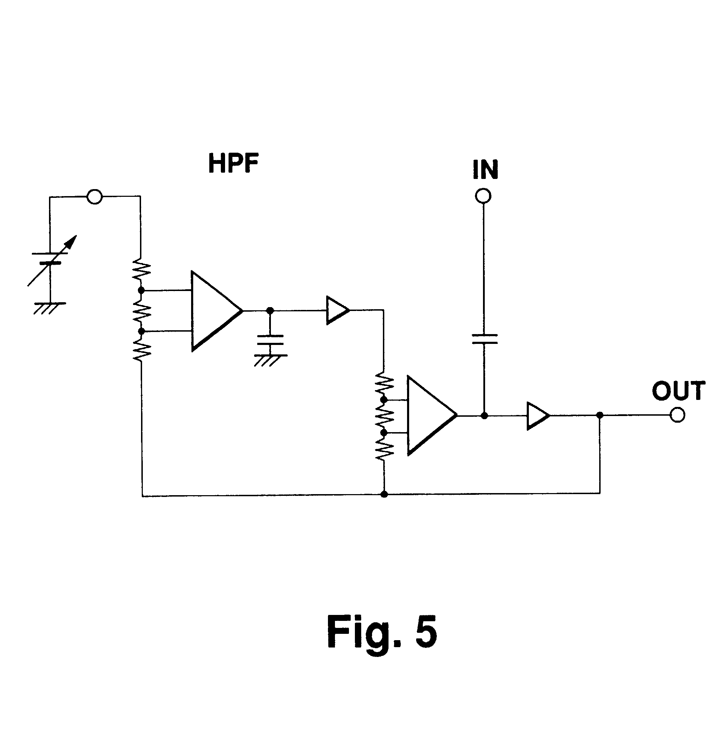

A detailed description is given in conjunction with the accompanying drawings. Figure 5 is an illustration where the high-pass filter (HPF) components in the variable time delay means 100 are taken out. As shown in Figure 5, a high-pass filter is formed when viewed from a signal input through a capacitor C2 (see Figure 4).

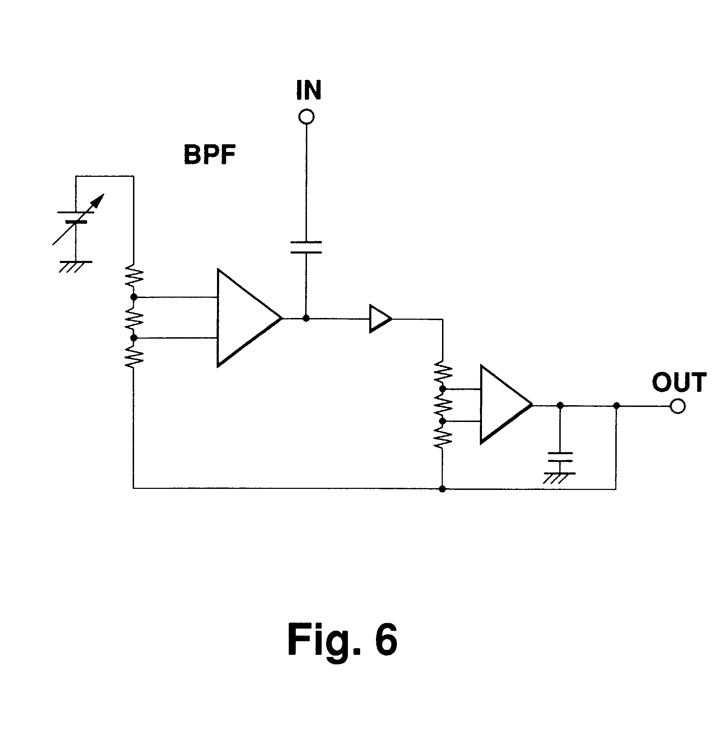

Figure 6 is an illustration where the band-pass filter (BPF) components in the variable time delay means 100 are taken out. As shown in Figure 6, a band-pass filter is formed when viewed from a signal input through a capacitor C1 (see Figure 4).

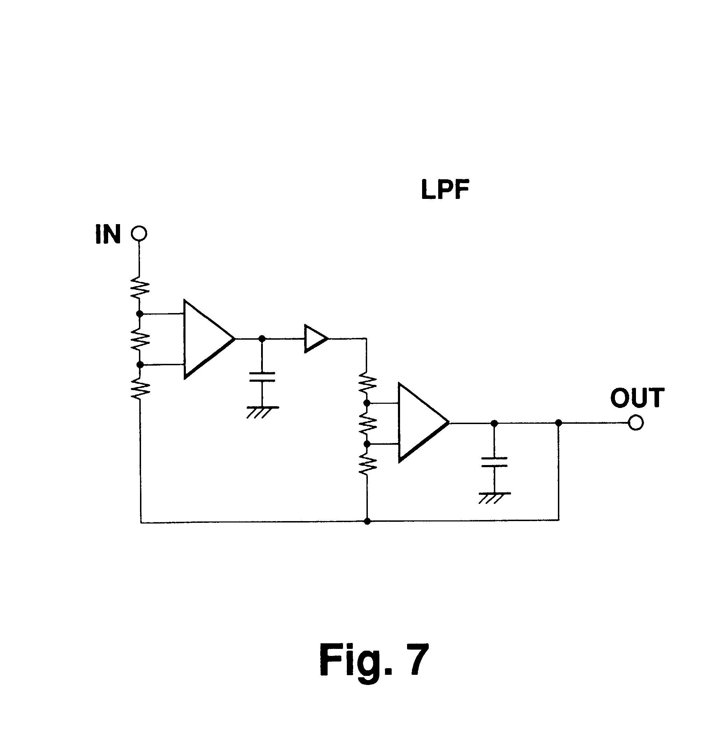

Figure 7 is an illustration where the low-pass filter (LPF) components in the variable time delay means 100 are taken out. As shown in Figure 7, a low-pass filter is formed when viewed from a signal input directly to the variable amplifier 102 (see Figure 4).

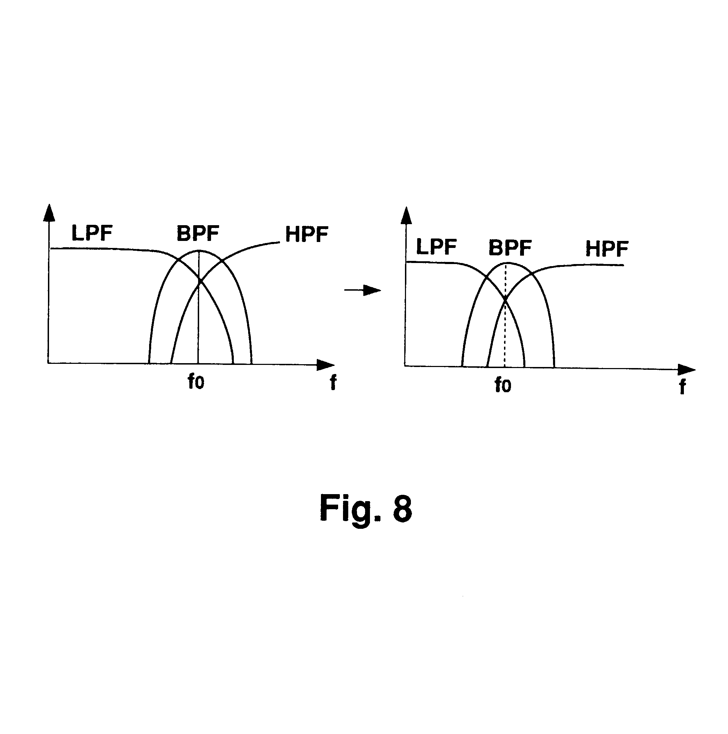

Figure 8 shows graphs representing the relationships among output signals of the filters. The horizontal and vertical axes of each graph shown in Figure 8 represent frequencies and their response respectively. As shown in Figure 8, the combined value of the output signals of the filters always becomes "1"; therefore, the variable time delay means 100 is a so-called all-pass filter and changes only the delay time of each signal.

As described above, the delay time of the variable time delay means 100 changes by changing the mutual conductance of the variable amplifiers 102 and 104. That is, by changing the mutual conductance, the frequency bands of the filters are changed from the left graph shown in Figure 8 to the right graph. It should be noted that only the frequency bands of the filters are changed and that the variable time delay means 100 itself remains an all-pass filter. That is, only the delay time for input signals changes and the amplitude characteristics do not change at all.

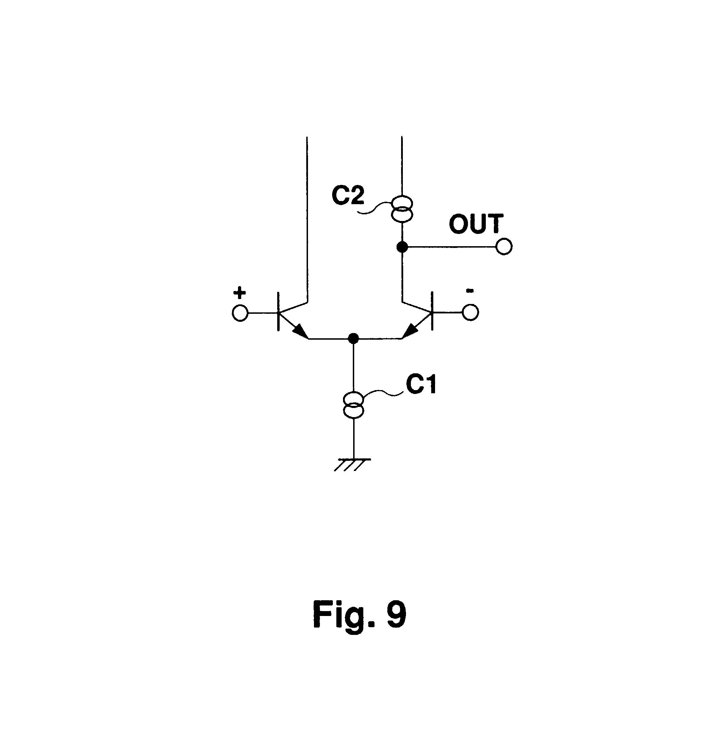

Figure 9 shows a detailed circuit diagram of the variable amplifier 102, 104. As shown in Figure 9, the variable amplifiers 102 and 104 are differential amplifiers, and the mutual conductance of the variable amplifiers 102 and 104 can be changed by changing the size of constant-current source C1 in the circuit.

Thus, according to the embodiment 1.1, the delay means 60 to 63 in the second delay circuit 59 in the embodiment 1.1 are implemented by one variable time delay means 100 which enables the delay time to be adjusted as desired, eliminating the need for providing a plurality of delay means 60-63.

Embodiment 2:

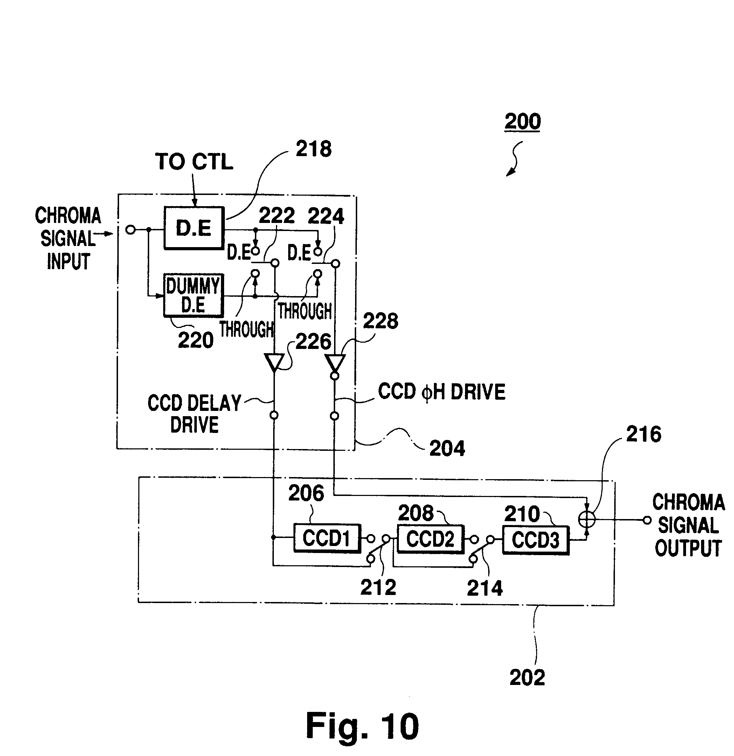

Figure 10 is a block diagram of a comb filter 200 according to embodiment 2 of the invention. As shown in Figure 10, the comb filter 200 comprises a first delay circuit 202 which adjusts the delay time according to the number of CCD stages and a second delay circuit 204 which adjusts the delay time finely.

The first delay circuit 202 comprises a delay circuit using three CCDs 206, 208, and 210, which have the same delay time as the delay sections in the embodiment 1.1, and two connection switches 212 and 214 to switch the CCDs for connection. The first delay circuit 202 further includes an adder which adds a signal delayed by the three CCDs and the second delay circuit 204 to generate a final output signal of the comb filter 200.

The second delay circuit 204 comprises variable time delay means 218 and dummy time delay means 220.

The variable time delay means 218 has a similar configuration to that of the variable time delay means 100 in the embodiment 1.2 for continuously controlling the delay time in response to an external delay time control signal TOCTL.

Therefore, according to the embodiment 2, the comb filter of higher precision 200 can be provided.

A chroma signal supplied to the comb filter 200 from an external circuit is fed into the dummy time delay means 220 as well as the variable time delay means 218. The dummy time delay means 220, which has a similar configuration to that of the variable time delay means 218, is a circuit whose delay time is the same as the variable time delay means 218. Signals passed and not passed through the variable time delay means 218 are used at the first delay circuit, as described below. To match the levels of the signals passed and not passed through the variable time delay means 218, the chroma signals are also passed through the dummy circuit similar to the variable time delay means 218.

The second delay circuit 204 includes two change switches 222 and 224. Movable strips of the switches 222 and 224 are connected to a non-inversion buffer 226 and an inversion buffer 228 respectively.

A signal output from the non-inversion buffer 226 is set by means of the switch 222. If the movable strip of the switch 222 is set to the D.E position shown in Figure 10, the chroma signal delayed by the variable time delay means 218 is fed into the first delay circuit 202 as a CCD DELAY DRIVE signal; if the movable strip of the switch 222 is set to the "through" position, the undelayed chroma signal passed through the dummy time delay means 220 is fed into the first delay circuit 202 as a CCD DELAY DRIVE signal.

A signal output from the inversion buffer 228 is set by means of the switch 224. If the movable strip of the switch 224 is set to the D.E position shown in Figure 10, the chroma signal delayed by the variable time delay means 218 is fed into the first delay circuit 202 as a CCD OH DRIVE signal; if the movable strip of the switch 224 is set to the "through" position, the undelayed chroma signal passed through the dummy time delay means 220 is fed into the first delay circuit 202 as a CCD OH DRIVE signal.

Thus, the comb filter in the embodiment 2 can provide desired filtering characteristics by handling the connection switches 212 and 214 and the change switches 222 and 224.

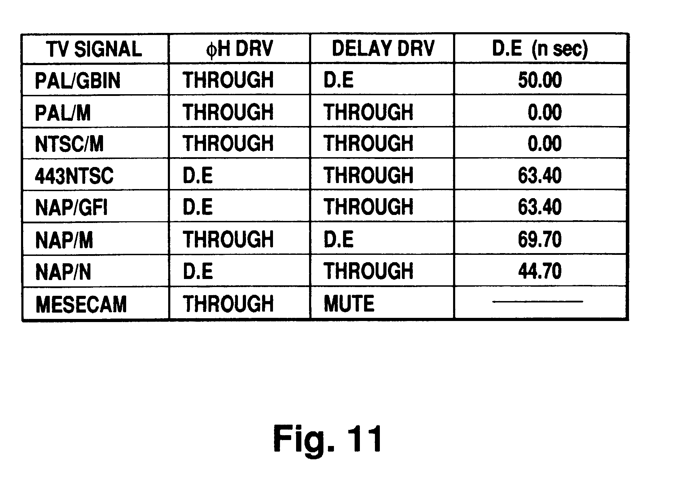

Figure 11 shows a table listing examples of setting the switches for the various television signals. The television signal types are listed under the leftmost column of the table in Figure 11, and signals supplied as OH DRIVE signals are listed under the leftmost column but one. That is, D.E under the leftmost column but two means that signals passed through the variable time delay means 218 are output as OH DRIVE signals, and through means that signals passed through the dummy time delay means 220 are output as OH DRIVE signals.

Signals supplied as DELAY DRIVE signals are listed under the rightmost column but one. That is, D.E under the column means that signals passed through the variable time delay means 218 are output as DELAY DRIVE signals, and through means that signals passed through the dummy time delay means 220 are output as DELAY DRIVE signals.

The delay time values set in the variable time delay means 218 are listed under the rightmost column of the table in Figure 11. The delay time is set in the variable time delay means 218 in response to the external control signal TOCTL, as described above.

Thus, the switches are switched conforming to the television signals as listed in the table of Figure 11 and the delay time set in the variable time delay means 218 is controlled in response to the control signal TOCTL, thereby forming a comb filter covering various types of television signals.

## Claims

1. A delay circuit comprising:

   (a) a first delay circuit (52) which delays a television signal comprising:

   (a1) a first group of delay sections (53a-53c,55,56) for delaying the television signal; and
   (a2) a first switch group (57,58) for switching the delay sections in the first group for connection in response to an external control signal for setting the delay time of said first delay circuit; and

   (b) a second delay circuit (59) which delays the television signal comprising:

   (b1) a second group of delay sections (60-63) for delaying the television signal wherein the delay time of each of the delay sections contained in the second group is shorter than the minimum delay time of the delay sections contained in the first group; and
   (b2) a second switch group (64) being responsive to the external control signal for selecting one of the delay sections (60-63) in the second group for setting a delay time thereof as the delay time of said second delay circuit,

   (c) a determination circuit (51) which distinguishes television signals and outputs said control signal in response to the determined television signal type wherein the television signal is delayed by said second delay circuit (59) and further delayed by said first delay circuit (52) wherein each of the delay sections of said first delay circuit is made up of a plurality of delay elements connected in series, said delay element transferring the television signal in synchronization with a clock signal which is supplied to each of the delay elements and

   wherein the delay time of said first group of delay sections is first set by switching the delay sections in the first group of delay sections in order to get said delay time as close to the required delay time as possible in accordance with the relationship between a chroma signal cycle and one horizontal synchronizing signal of the television signal and the delay time difference between said required delay time and the delay time represented by the first group of delay sections is finely adjusted by said second group of delay sections.

2. A delay circuit comprising:

   (a) a first delay circuit (52) which delays a television signal comprising:

   (a1) a first group of delay sections (53a-53c,55,56) for delaying the television signal; and
   (a2) a first switch group (57,58) for switching the delay sections in the first group for connection in response to an external control signal for setting the delay time of said first delay circuit; and

   (b) a second delay circuit (100, 204) which delays the television signal and whose delay time is variably set continously in response to the external control signal;
   (c) a determination circuit (51) which distinguishes television signals and outputs said control signal in response to the determined television signal type

   wherein the television signal is delayed by said second delay circuit (59) and further delayed by said first delay circuit (100, 204) with a delay time that can be varied continously,
   wherein each of the delay sections of said first delay circuit is made up of a plurality of delay elements connected in series, said delay element transferring the television signal in synchronization with the clock signal which is supplied to each of the delay elements, and
   wherein the delay time of said first group of delay sections is first set by switching the delay sections in the first group of delay sections in order to get said delay time as close to the required delay time as possible in accordance with the relationship between a chroma signal cycle and one horizontal synchronizing signal of the television signal and the delay time difference between said required delay time and the delay time represented by the first group of delay sections is finely adjusted by said second group of delay sections.

3. A delay circuit as claimed in claims 1 or 2 wherein said first delay circuit includes three types of delay sections.

4. A delay circuit as claimed in claims 1 or 2 wherein said clock signal is a signal of a given frequency.

5. A delay circuit as claimed in claim 2 wherein said second delay circuit (100, 204) includes variable amplifiers whose mutual conductance is variably set in response to said external control signal.

**Patentansprüche**

1. Verzögerungsschaltung mit:

    a) einer ersten Verzögerungsschaltung (52), die ein Fernsehsignal verzögert, mit:

        a1) einer ersten Gruppe von Verzögerungsabschnitten (53a - 53c, 55, 56) zum Verzögern des Fernsehsignals; und
        a2) einer ersten Schaltgruppe (57, 58) zum Schalten der Verzögerungsabschnitte in der ersten Gruppe für eine Verbindung in Antwort auf ein externes Steuersignal zum Setzen der Verzögerungszeit der ersten Verzögerungsschaltung; und

    b) einer zweiten Verzögerungsschaltung (59), die das Fernsehsignal verzögert, mit:

        b1) einer zweiten Gruppe von Verzögerungsabschnitten (60 - 63) zum Verzögern des Fernsehsignals, wobei die Verzögerungszeit jeder der Verzögerungsabschnitte, die in der zweiten Gruppe enthalten sind, kürzer ist als die minimale Verzögerungszeit der Verzögerungsabschnitte, die in der ersten Gruppe enthalten sind; und
        b2) einer zweiten Schaltergruppe (64), die in Antwort auf das externe Steuersignal eine der Verzögerungsabschnitte (60-63) der zweiten Gruppe auswählt, um deren Verzögerungszeit zu setzen als die Verzögerungszeit der zweiten Verzögerungsschaltung,

    c) einer Bestimmungsschaltung (51), die Fernsehsignale unterscheidet und ein Steuersignal ausgibt in Antwort auf den bestimmten Fernsehsignaltyp, wobei das Fernsehsignal verzögert wird durch die zweite Verzögerungsschaltung (59) und ferner verzögert wird durch die erste Verzögerungsschaltung (52), wobei jeder der Verzögerungsabschnitte der ersten Verzögerungsschaltung gebildet wird durch eine Vielzahl von Verzögerungselementen, die in Serie verbunden sind, wobei das Verzögerungselement das Fernsehsignal synchron zu einem Taktsignal, welches jedem der Verzögerungselemente zugeführt wird, überträgt und

    wobei die Verzögerungszeit der ersten Gruppe von Verzögerungsabschnitten zuerst gesetzt wird durch Schalten der Verzögerungsabschnitte in der ersten Gruppe der Verzögerungsabschnitte, um die Verzögerungszeit so nahe wie möglich an die gewünschte Verzögerungszeit zu bringen in Übereinstimmung mit dem Verhältnis zwischen einem Chromasignalzyklus und einem horizontalen Synchronisationssignal des Fernsehsignals, und wobei die Verzögerungszeitdifferenz zwischen der gewünschten Verzögerungszeit und der Verzögerungszeit, die durch die erste Gruppe von Verzögerungsabschnitten repräsentiert wird, fein eingestellt wird durch die zweite Gruppe von Verzögerungsabschnitten.

2. Verzögerungsschaltung mit:

    a) einer ersten Verzögerungsschaltung (52), die ein Fernsehsignal verzögert, mit:

        a1) einer ersten Gruppe von Verzögerungsabschnitten (53a - 53c, 55, 56) zum Verzögern des Fernsehsignals; und
        a2) einer ersten Schaltgruppe (57, 58) zum Schalten der Verzögerungsabschnitte in der ersten Gruppe für eine Verbindung in Antwort auf ein externes Steuersignal zum Setzen der Verzögerungszeit der ersten Verzögerungsschaltung; und

    b) einer zweiten Verzögerungsschaltung (100, 204), die das Fernsehsignal verzögert und deren Verzögerungszeit variabel kontinuierlich gesetzt wird in Antwort auf das externe Steuersignal;
    c) einer Bestimmungsschaltung (51), die die Fernsehsignale unterscheidet und das Steuersignal ausgibt in Antwort auf den bestimmten Fernsehsignaltyp,

    wobei das Fernsehsignal verzögert wird durch die zweite Verzögerungsschaltung (59) und ferner verzögert wird durch die erste Verzögerungsschaltung (100, 204) mit einer Verzögerungszeit, die kontinuierlich variiert werden kann, wobei jede der Verzögerungsabschnitte der ersten Verzögerungsschaltung aus einer Vielzahl von Verzögerungselementen besteht, die in Serie verbunden sind und wobei das Verzögerungselement das Fernsehsignal synchron mit dem Taktsignal, welches jedem der Verzögerungselemente zugeführt wird, überträgt, und wobei die Verzögerungszeit der ersten Gruppe von Verzögerungsabschnitten zuerst gesetzt wird durch Schalten der Verzögerungsabschnitte in der ersten Gruppe von Verzögerungsabschnitten, um die Verzögerungszeit so nahe wie möglich zu einer gewünschten Verzögerungszeit zu bringen in Übereinstimmung mit dem Verhältnis zwischen einem Chromasignalzyklus und einem horizontalen Synchronisationssignal des Fernsehsignals, und

    wobei die Verzögerungszeitdifferenz zwischen der gewünschten Verzögerungszeit und der Verzögerungzeit, die durch die erste Gruppe von Verzögerungsabschnitten repräsentiert wird, fein eingestellt wird durch die zweite Gruppe von Verzögerungsabschnitten.

3. Verzögerungsschaltung nach Anspruch 1 oder 2, wobei die erste Verzögerungsschaltung drei Typen von Verzögerungsabschnitten enthält.

4. Verzögerungsschaltung nach Anspruch 1 oder 2, wobei das Taktsignal ein Signal mit einer vorgegebenen Frequenz ist.

5. Verzögerungsschaltung nach Anspruch 2, wobei die zweite Verzögerungsschaltung (100, 204) variable Verstärker aufweist, deren gegenseitige Konduktanz variabel gesetzt wird in Antwort auf das externe Steuersignal.

**Revendications**

1. Circuit à retard comprenant:

(a) un premier circuit à retard (52) qui retarde un signal de télévision comprenant:

(a1) un premier groupe de sections à retard (53a à 53c, 55, 56) destinées à retarder le signal de télévision; et
(a2) un premier groupe de commutateurs (57, 58) destinés à commuter les sections à retard dans le premier groupe pour assurer la connexion en fonction d'un signal de commande externe afin de paramétrer la durée de retard dudit premier circuit à retard; et

(b) un second circuit à retard (59) qui retarde le signal de télévision comprenant:

(b1) un second groupe de sections à retard (60 à 63) destinées à retarder le signal de télévision, dans lequel la durée de retard de chacune des sections à retard contenues dans le second groupe est plus courte que la durée de retard minimum des sections à retard contenues dans le premier groupe; et
(b2) un second groupe de commutateurs (64) sensibles au signal de commande externe afin de sélectionner l'une des sections à retard (60 à 63) dans le second groupe afin de paramétrer la durée de retard de celle-ci comme la durée de retard dudit second circuit à retard,

(c) un circuit de détermination (51) qui identifie les signaux de télévision et délivre ledit signal de commande en fonction du type de signal de télévision déterminé,

dans lequel le signal de télévision est retardé par ledit second circuit à retard (59) et aussi retardé par ledit premier circuit à retard (52), dans lequel chacune des sections à retard dudit premier circuit à retard est constituée d'une pluralité d'éléments à retard connectés en série, ledit élément à retard transférant le signal de télévision de manière synchronisée avec un signal d'horloge qui est délivré à chacun des éléments à retard et dans lequel la durée de retard dudit premier groupe de sections à retard est, en premier, paramétrée par la commutation des sections à retard dans le premier groupe de sections à retard dans le but d'obtenir que ladite durée de retard soit aussi proche de la durée de retard requise que possible en fonction de la relation existant entre un cycle de signal de chrominance et un signal de synchronisation horizontale du signal de télévision, et la différence de durée de retard entre ladite durée de retard requise et la durée de retard représentée par le premier groupe de sections à retard est ajustée de manière fine par ledit second groupe de sections à retard.

2. Circuit à retard comprenant:

(a) un premier circuit à retard (52) qui retarde un signal de télévision comprenant:

(a1) un premier groupe de sections à retard (53a à 53c, 55, 56) destinées à retarder le signal de télévision; et
(a2) un premier groupe de commutateurs (57, 58) destinés à commuter les sections à retard dans le premier groupe pour assurer la connexion en fonction d'un signal de commande externe afin de paramétrer la durée de retard dudit premier circuit à retard; et

(b) un second circuit à retard (100, 204) qui retarde le signal de télévision et dont la durée de retard est paramétrée de manière variable en fonction du signal de commande externe;
(c) un circuit de détermination (51) qui identifie les signaux de télévision et délivre ledit signal de commande en fonction du type de signal de télévision déterminé,

dans lequel le signal de télévision est retardé par ledit second circuit à retard (59) et est aussi retardé par ledit premier circuit à retard (100, 204) avec une durée de retard qui peut être modifiée de manière continue,

dans lequel chacune des sections à retard dudit premier circuit à retard est constituée d'une pluralité d'éléments à retard connectés en série, ledit élément à retard transférant le signal de télévision de manière synchronisée avec le signal d'horloge qui est délivré à chacun des éléments à retard, et

dans lequel la durée de retard dudit premier groupe de sections à retard est, en premier, paramétrée par la commutation des sections à retard dans le premier groupe de sections à retard afin que ladite durée de retard soit aussi proche de la durée de retard requise que possible en fonction de la relation existant entre un cycle de signal de chrominance et un signal de synchronisation horizontale du signal de télévision et la différence de durée de retard entre ladite durée de retard requise et la durée de retard représentée par le premier groupe de sections à retard est ajustée de manière fine par ledit second groupe de sections à retard.

3. Circuit à retard selon les revendications 1 ou 2, dans lequel ledit premier circuit à retard comprend trois types de sections à retard.

4. Circuit à retard selon les revendications 1 ou 2, dans lequel ledit signal d'horloge est un signal d'une fréquence donnée.

5. Circuit à retard selon la revendication 2, dans lequel ledit second circuit à retard (102, 204) comprend des amplificateurs variables dont la conductance mutuelle est paramétrée de manière variable en fonction dudit signal de commande externe.

**Fig. 1**

| | | TV SIGNAL NAME | CHROMA SIGNAL FREQUENCY | FIELD FREQUENCY | DELAY TIME TD (HORIZONTAL SYNCHRONIZING SIGNAL PERIOD) | NO. OF STAGES |
|---|---|---|---|---|---|---|
| BROAD-CAST SIGNALS | 1 | NTSC/M | 3.579545 [MHz] | 60 [Hz] | 63.5555 [$\mu$ sec] | 909.99909 |
| | 2 | 4.43 NTSC | 4.43361875 | 60 | 63.5555 | 1127.1231 |
| | 3 | PAL/GBI | 4.43361875 | 50 | 64 x 2 | 2270.0128 |
| | 4 | PAL/M | 3.57561149 | 60 | 63.5555 x 2 | 1817.9981 |
| | 5 | PAL/N | 3.58205625 | 50 | 64 x 2 | 1834.0127 |
| VTR SIGNALS | 6 | NTSC AMUSEMENT PAL/GBI | 4.43361875 | 60 | 63.5555 | 1127.1231 |
| | 7 | NTSC AMUSEMENT PAL/M | 3.57561149 | 60 | 63.5555 | 908.99908 |
| | 8 | NTSC AMUSEMENT PAL/N | 3.58205625 | 60 | 63.5555 | 910.63749 |

## Fig. 2

EP 0 595 223 B1

| | | TV SIGNAL NAME | TOTAL NO. OF DELAY ELEMENTS OF DELAY SECTIONS | $\dfrac{\text{Fsc CHROMA SIGNAL FREQUENCY}}{\text{Fh HORIZONTAL SYNCHRO-NIZING SIGNAL FREQUENCY}}$ | $\dfrac{2 \cdot \text{Fsc}}{\text{Fh}}$ | SHIFT AMOUNT [ns] |
|---|---|---|---|---|---|---|
| BROAD-CAST SIGNALS | 1 | NTSC/M | 910 | 2.275 | | 0 |
| | 2 | 4.43 NTSC | 910 | 281.5 + 0.281 | | 63.4 |
| | 3 | PAL/GBI | 1832.72 | | 567.5 | 50 |
| | 4 | PAL/M | 1820 | | 554.5 | 0 |
| | 5 | PAL/N | 1832.72 | | 558.5 | 50 |
| VTR SIGNALS | 6 | NTSC AMUSEMENT PAL/GBI | 910 | 281.5 + 0.281 | | 63.4 |
| | 7 | NTSC AMUSEMENT PAL/M | 910 | 227.5 - 0.25 | | 69.7 |
| | 8 | NTSC AMUSEMENT PAL/N | 910 | 227.5 + 0.16 | | 44.7 |

## Fig. 3

100

IN

C1

C2

OUT

gm1

102

gm2

104

# Fig. 4

**HPF**

**IN**

**OUT**

# Fig. 5

# Fig. 6

**LPF**

**Fig. 7**

# Fig. 8

**Fig. 9**

**Fig. 10**

| TV SIGNAL | φH DRV | DELAY DRV | D.E (n sec) |
|-----------|--------|-----------|-------------|
| PAL/GBIN  | THROUGH | D.E | 50.00 |
| PAL/M     | THROUGH | THROUGH | 0.00 |
| NTSC/M    | THROUGH | THROUGH | 0.00 |
| 443NTSC   | D.E | THROUGH | 63.40 |
| NAP/GFI   | D.E | THROUGH | 63.40 |
| NAP/M     | THROUGH | D.E | 69.70 |
| NAP/N     | D.E | THROUGH | 44.70 |
| MESECAM   | THROUGH | MUTE | ———— |

# Fig. 11

**Fig. 12**